# EUROPEAN PATENT APPLICATION

(11) **EP 3 493 124 A1**
(43) Date of publication of application: **05.06.2019**
(21) Application number: 17204561.9
(22) Date of filing: 30.11.2017
(51) Int. Cl.: G06Q 10/06, G06Q 50/04

(54) **METHOD FOR AUTOMATIC CONSISTENCY CHECKING AFTER MANUAL INTERVENTION IN BPMN BASED WORKFLOW EXECUTION**

(71) Applicant: Siemens Aktiengesellschaft, 80333 München (DE)
(72) Inventor: SCHNITTGER, Jens, 91475 Lonnerstadt (DE); CAMERA, Fabrizio, 15069 Serravalle Scrivia (AL) (IT); PERETTI, Massimo, 16135 Genova (IT)
(74) Representative: Maier, Daniel Oliver

(57) **Abstract**

The present invention discloses a method for automatic consistency checking after manual intervention in BPMN based workflow execution in a production environment.

## Description

The invention relates to a method for automatic consistency checking after manual intervention in BPMN based workflow execution in a production environment in the context of a Manufacturing Execution System (MES). Most recently, the term Manufacturing Operation Management (MOM) is more and more used to replace the term MES.

As defined by the Manufacturing Enterprise Solutions Association (MESA International), a MES/MOM system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication."

The functions that MES/MOM systems usually include, in order to improve quality and process performance of manufacturing plants, are resource allocation and status, dispatching production orders, data collection/acquisition, quality management, maintenance management, performance analysis, operations/detail scheduling, document control, labor management, process management and product tracking.

For example, the Siemens Corp. offers a broad range of MES/MOM products under its SIMATIC IT® product family.

In a Manufacturing Execution System, the usage and management of configurable workflows for the production process control is a key functionality. As a standard for modeling such workflows, the BPMN standard (Business Process Modeling and Notation) has assumed a growing importance (see also Object Management Group OMG Standard and BPMN 2.0.1 according to ISO/IEC 19510:2013 and ISBN 978-3-7386-2671-1).

Earlier solutions and products were limited to an automatic execution of the configured workflow graph with only few possibilities for manual intervention, such as pausing and resuming workflows. However, certain industry domains, such as Pharma and Life Science, require extensive functionalities to modify the configured workflow graph in order to deal with unforeseen situations and/or cover workflows that occur more rarely but are very varied and too cumbersome to be modeled explicitly in all detail. This involves functions for manually changing the execution state of the workflow by changing the position/existence of the token(s) which represent(s) the current location(s) in the workflow graph where the execution has arrived just before stopping it. Further, functions are also desirable for changing the values of input and output variables of steps (tasks) of the workflow. The products of Siemens AG, such as eBR for life science and the workflow component in the SIMATIC IT UA MES platform, will offer such functionalities - the so-called Full Manual Mode (FMM).

The Full Manual Mode (FMM) allows to resume the automatic execution of the production workflow after performing the manual changes to the workflow configuration, or to continue in a step by step semi-automatic mode. However, such manually changed configurations may turn out to be inconsistent from the point of view of certain logical criteria taking into account the topology of the workflow graph. This is usually not obvious for the user to decide, but continuing with inconsistent configurations may lead to serious consequences for the manufacturing workflow and so it is important to offer system assistance for warning the user. Currently known systems do not support the user in this regard.

It is therefore the objective of the present invention to provide a method for automatic consistency checking after manual intervention in BPMN based workflow execution in a production environment in the context of a Manufacturing Execution System (MES) that provides a clear feedback to the user when the amendments made during the manual intervention do not satisfy the logical criteria taking into account the topology of the workflow graph.

This objective is achieved according to the present invention by method for automatic consistency checking after manual intervention in BPMN based workflow execution in a production environment, comprising the steps of:
a) providing a BPMN based workflow for the production environment in terms of a BPMN based workflow graph of tasks; said production environment comprising a plurality of production resources;
b) operating the plurality of production resources according to the tasks defined in the BPMN based workflow graph;
c) displaying the status of the BPMN based workflow execution on a graphical user interface by tokens which represent at their respective current location in a BPMN based workflow graph the status of the BPMN based workflow execution;
d) providing a touch sensitive screen within the graphical user interface for manual intervention in the BPMN based workflow execution;
e) changing the status of the BPMN based workflow execution by manual intervention in terms of:
   e1) moving an existing token to a new position within the BPMN based workflow graph; and/or
   e2) removing an existing token from the BPMN based workflow; and/or
   e3) creating a new token and inserting the new token at a distinct position in the BPMN based workflow graph;
f) applying an algorithm for checking whether the manual intervention has properly observed certain logical criteria taking into account a topology of the workflow graph, wherein the algorithm is enabled to analyze a token configuration after manual intervention for the following logical criteria:
   f1) potentially unwanted interactions between tasks; and/or
   f2) excessive number of new tokens created being incompatible with any possible workflow during resumed automatic BPMN based workflow execution; and/or
   f3) missing values for required input variables of tasks;
g) indicating by warning messages whether the algorithm has identified a violation of the logical criteria.

This method therefore enables the user to correct any discrepancies caused by a manual intervention with the logical criteria given by the amended workflow. The invention helps to prevent erroneous human control decisions for manufacturing workflows. Such errors could be very costly or even dangerous, or at least result in a considerable loss of time and material. The algorithm detects the most common problems even for very complex workflows where it can be very hard for the human user to assess the admissibility of his/her manipulations without system assistance. Thus, the number of errors can be substantially reduced in this way.

Preferred but not exclusive embodiments of the invention will now be described with reference to the accompanying drawings, which depict in:
- Figure 1: schematically an example for a BPMN based workflow graph;
- Figure 2: schematically an example for the movement of a token within the BPMN based workflow graph as shown in Figure 1;
- Figure 3: schematically an example for the manual setting of input variables for a task being part of the BPMN based workflow graph as shown in Figure 1;
- Figure 4: schematically an example for the insertion of two new tokens within the BPMN based workflow graph as shown in Figure 1; and
- Figure 5: schematically an example for the insertion of a socalled "throwaway" token within the BPMN based workflow graph as shown in Figure 1.

The present invention lays in the technical field of manufacturing execution systems (MES/MOM). By way of nonlimiting example, reference will be made to the architecture of the SIMATIC IT (in short, SIT) system of Siemens Corp.

SIMATIC IT is a collection of highly-integrated components, designed to integrate the systems within each factory, standardize production across the entire enterprise and keep manufacturing processes aligned with supply-chain activity. The core of this system is the SIMATIC IT Production Modeler (PM), which is an object-oriented graphical tool that enables the user to follow the entire lifecycle of a MES project. PM is a modeling environment where the functions, belonging to different SIMATIC IT components, are combined graphically in order to explicitly define the execution logic (explicit-rules approach). An overview of the product can be found in the document "What's new in the SIMATIC IT PRODUCTION SUITE v. 7.0 SP2, available on the website www.siemens.com.

The present invention relates to the field of the management of the automatic workflow execution. In a Manufacturing Execution System, the usage and management of configurable workflows for the production process control is a key functionality. As a standard for modeling/configuring such workflows, the BPMN standard (Business Process Modeling and Notation) is applied in the present examples. Details of the BPMN standard can be seen under Object Management Group OMG Standard and BPMN 2.0.1 according to ISO/IEC 19510:2013 and ISBN 978-3-7386-2671-1).

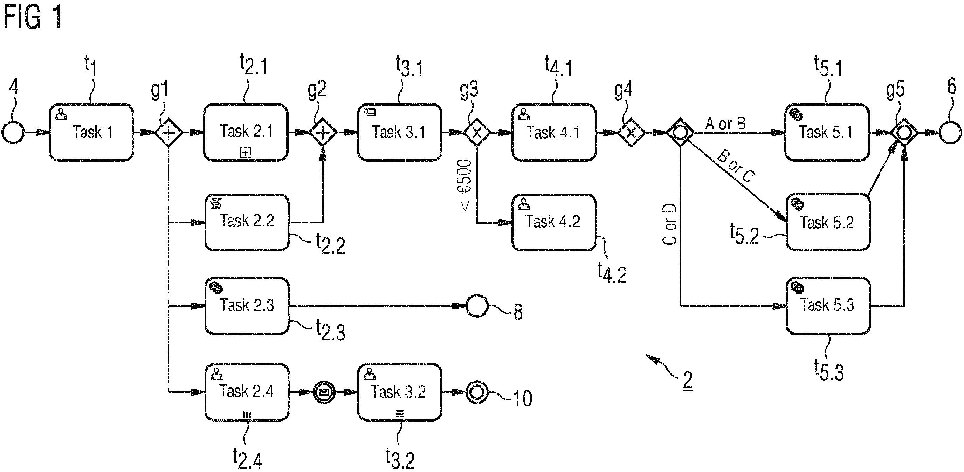

Figure 1 schematically shows an example for a BPMN based workflow graph 2 - hereinafter referred to as graph 2. The graph 2 is used as an orchestration layer for managing complex production processes in the manufacturing and process industry. The graphs 2 allow for interaction with users as well as lower level control logic including required data exchanges. These interactions are also coded in a formal way in BPMN. The graph 2 is operated automatically under the regime of the so-called Full Manual Mode that enables the user to perform the following manual interactions:
i) Pause the automatic execution of the workflow and switch to manual mode;
ii) Proceed step-by-step (task-by-task) in a controlled fashion according to the defined graph 2;
iii) Execute a single step/task/activity which is not necessarily the next one according to the defined graph 2 wherein all other tokens remain in place (token is a bullit point in the graph 2 at the position of the workflow tasks that are either currently active or (if the workflow has been paused) waiting to be executed next);
iv) Abort a running task;
v) Change output values resulting from an activity just executed;
vi) Set input values before executing a task;
vii) Change values of workflow variables;
viii) Displace, create and delete tokens of the workflow;
ix) Resume the workflow in automatic mode; and
x) Abort a running workflow.

For the automatic execution of the workflow, the graph 2 comprises a variety of tasks t1, t2.1 to t2.4, t3.1, t3.2, t4.1, t4.2 and t5.1 to 5.3 - hereinafter referred to ask talks t if not a distinct task is highlighted. The graph 2 starts with a start event 4 and ends at a final act event 6. Some of the tasks t2.3 and t3.2 have other final act events 8, 10. Each link among two tasks is represented by a gateway g1 to g5 wherein each gateway g1 to g5 is selected from a limited of number of possible gateways what will be described in more detail below.

Once the criterion for the start event 4 is fulfilled, the execution of the graph 2 will follow automatically. In the graph 2, the tasks t just present an arbitrary variety of production activities that are executed by resources, such as machines, personnel, material, administrative and/or logistical activities and the like.

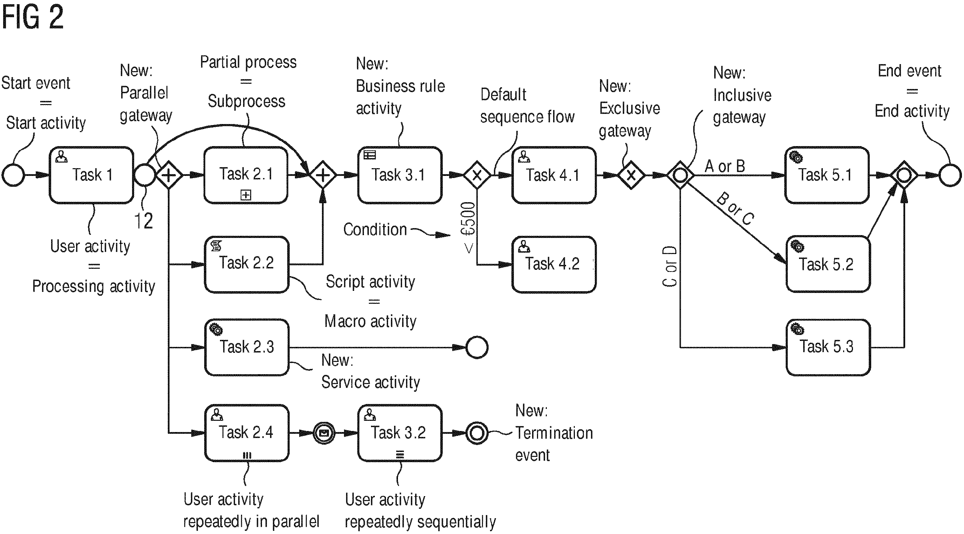

During the automatic execution, the current state of the execution of the graph 2 is characterized by so-called tokens which indicate the tasks t which are either currently active or (if the workflow has been paused) waiting to be executed next. This is schematically shown in Figure 2 where the automatic execution of the workflow has been paused after the execution of the task t1. A token 12 represents this state. Now, due to manual intervention of the user, the token 12 is moved into a position downstream of the task t2.1. With other words, the workflow will not pass through this task after resumption of the workflow.

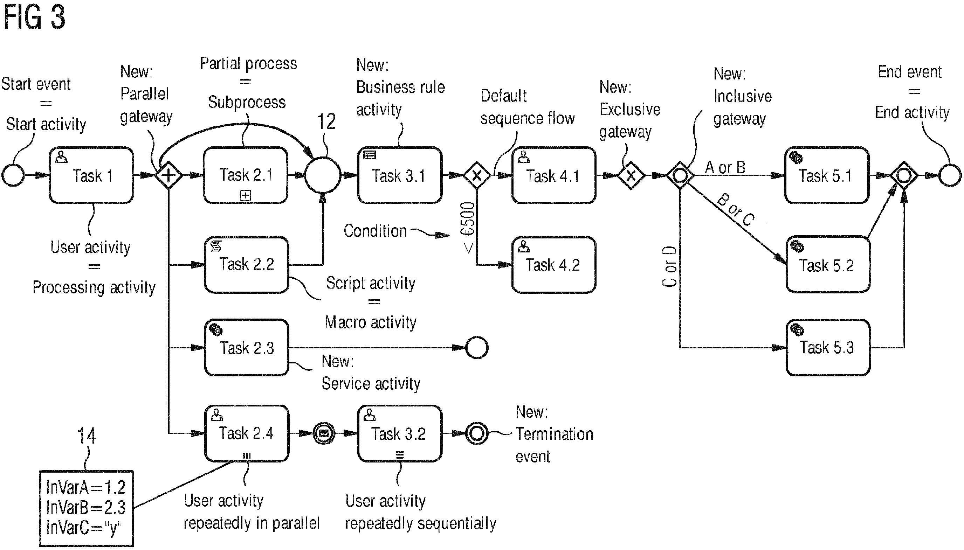

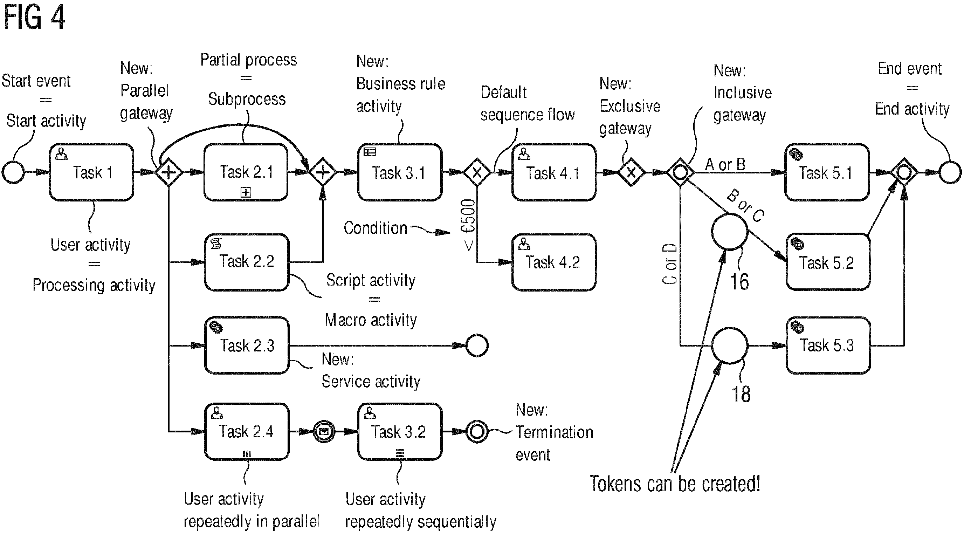

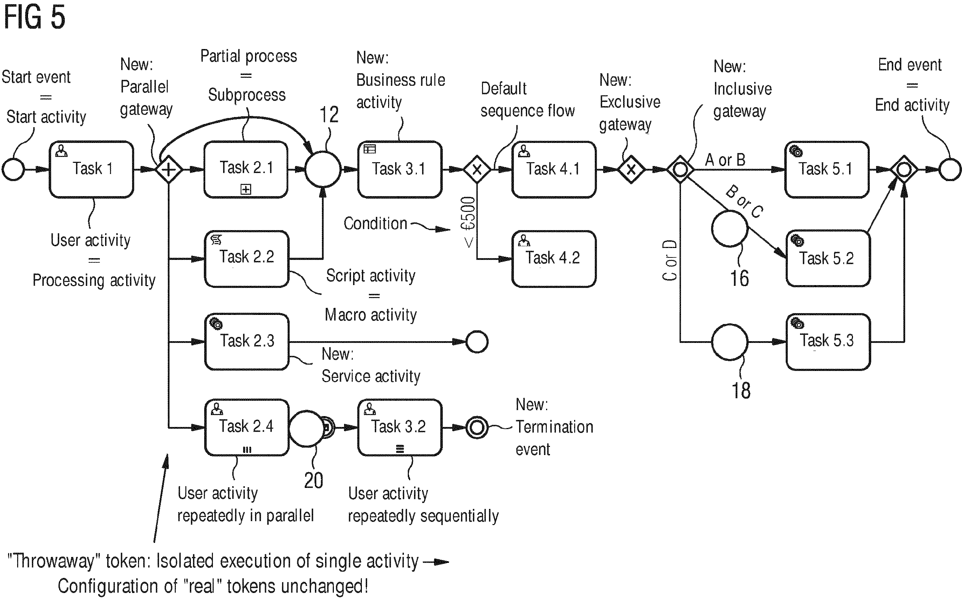

Figure 3 schematically represents the case of the option to provide input variables 14 to the task t2.4. The token 12 is now at its new position. Figure 4 schematically represent the insertion of the new tokens 16, 18 upstream of the respective tasks t5.2 and t5.3 resp. Eventually, Figure 5 schematically illustrates the insertion of a so-called throwaway token 20 which will cause a single activity and does not touch the configuration of the other tokens 12, 16 and 18.

In order to check whether the amendments as shown exemplarily in the Figure 2 to 5 will be consistent with the logical criteria that are given according to the topology of the BPMN workflow graph 2, an algorithm is applied having the following content. For simplicity, only workflows which do not contain calls of other workflows have been considered in the examples according to Figures 2 to 5. In principle, such calls may always be mapped to the situation considered by explicitly including the called workflows in the workflow considered.

The workflow graph usually comprises:
a) the Tasks;
b) Catch/throw events;
c) Gateways of any of the elementary types (inclusive diverging, inclusive converging, exclusive diverging, exclusive converging).

The definitions used of these types of gateways are as follows:
i) Diverging inclusive: a gateway with one entry and n exits. A single entering token may lead to 0...n exiting tokens, depending on conditions attached to the gateway exits. The case of 0 exiting tokens may theoretically occur if there is no default exit branch, to be taken if no condition is fulfilled. However, in the BPMN 2.0 specification, this is said to be associated with a runtime error and is therefore excluded from the considerations here. Conditions may also be absent for exclusive converging and inclusive diverging gateways, but this is just the special case of a trivial (null) condition. The explicit description given here refers to the BPMN 2.0 standard for concreteness, but the idea does not really need this standard. What matters is the existence of gateways with the specified behaviors;
ii) Diverging exclusive: also a gateway with one entry and n exits. However, a single entering token may lead only to 0 or 1 exiting token, by the nature of the conditions attached to the exits. The case of 0 exiting tokens may theoretically occur if there is no default exit branch, to be taken if no condition is fulfilled. However, in the BPMN 2.0 specification, this is said to be associated with a runtime error and is therefore excluded from the considerations here;
iii) Converging exclusive: a gateway with n entries and one exit. According to the BPMN 2.0 specification, a converging Exclusive Gateway is used to merge alternative paths. Each incoming token is routed to the outgoing Sequence Flow without synchronization;
iv) Converging inclusive gateway: also a gateway with n entries and one exit. However, there have to be n entering tokens to produce one outgoing token. The specification in BPMN 2.0 is not fully clear, and the following definition is assumed: The gateway will wait until all n entering tokens have arrived before it produces an outgoing token (provided the conditions are fulfilled). After that, these entry tokens are removed. If there are n entering tokens present but not all conditions are fulfilled, these tokens are also removed but there will be no outgoing token;
v) Parallel diverging gateway: a parallel diverging gateway creates parallel paths without checking any conditions and therefore is just a special case of the diverging inclusive gateway;
vi) Parallel converging gateway: a parallel converging gateway will wait for all incoming tokens before creating the outgoing token and therefore is just a special case of the converging inclusive gateway;
vii) Event based inclusive or exclusive gateway: this is not a different type of gateway from the point of view of the problem considered here. The fact that the decisions depend on the event and not on conditions attached to sequence flows does not matter, because conditions will be irrelevant for the considerations below.

More general complex gateways (in particular, mixed gateways) can be generated by combinations of the above elementary types.

In consideration of these gateways, the algorithm will perform a Token interaction check. The Full Manual Mode allows to create an arbitrary token configuration, with many tokens, within a given workflow graph/instance. This can cause unexpected/unpredictable behavior, because a token traversing a certain task may change output variables of this task, which in turn are used as an input for another task currently traversed by a token. Therefore, it is useful to emit a system warning if the token configuration chosen is such that after restarting step by step or automatic execution, such interactions can occur when starting to execute the tasks in front of which the tokens are currently waiting. This is possible simply by analyzing the BPMN file with respect to the mappings of task output variables to task input variables and comparing with the current token configuration to these logical criteria.

In this example, the system output will exemplarily occur in the form:
"Token i at task n will impact on token j at task m through overwriting of task m input variable Var_m_1 by task n output variable Var_n_4".

This elementary version of the check is particularly suitable if step by step execution is intended after finishing the manual changes to the workflow. Then, the above check will be repeated after every step. Impact analysis after the first step will not only take into account the interaction between the tasks to be executed next, but also the impact of all tasks already executed after the start of step by step execution, on any task waiting to be executed next, if such an impact occurs between different tokens. If the number of tokens is increased because a token passes through an inclusive diverging gateway, all exiting tokens will be included in the consideration from there on, but will be considered as multiple copies of the same token (no impact analysis between these tokens, because such impacts would also arise during automatic flow execution and are not consequences of the manual changes to the workflow graph).

If resumption of automatic execution is intended instead of step by step execution, there are two possibilities:
First, one may use an extended version of the check, which takes care also of the situation where a token i does not impact another token j at the positions where they are currently sitting, but may have an impact later on as both tokens follow one of their possible paths. This extended version of this check will first determine all tasks affected by the execution of a task in front of which a token i is waiting. It will then check if there is a possibility that another token j (including all copies of j that might be generated by inclusive diverging gateways) will potentially traverse one or more of these tasks when automatic execution is started. If yes, a warning can be displayed in the form: "token i impacts on token j at tasks n1, n2,... ", together with information on the input/output variables involved as described for the elementary check above.

In order to check this, all paths that may occur when automatic execution for token j continues are determined by formal analysis of the workflow graph. All exits from diverging gateways are explored regardless of the conditions attached to them (pessimistic perspective). For every path, it is checked if it contains one of the affected tasks mentioned above. The check is carried out for all tokens j unequal to i. The procedure may be continued by moving the token i along any path allowed by automatic execution, step by step, and checking again as above if there are impacts.

The procedure may be continued for all i. The user may also select certain tokens i for analysis only. This amounts to a kind of fast, multiple simulation where the tasks are not actually executed but only the possible paths are generated according to the possibilities allowed by the gateways which are responsible for the topology of the workflow graph. The amount of impacts detected this way is generally too large because the gateway conditions were ignored.

The other possibility is to use only the elementary check as described above only and pause automatic execution whenever an impact between different tokens is detected. The user must then confirm manually that he/she wants to continue.

The second group of checks performed by the algorithm is the check on a possibly excessive number of tokens. Independently of interactions between tokens, an unrealistically large number of tokens may be present in a workflow graph/instance. This check may be realized again by fast simulation, but moving backwards in time:
The token configuration to be analyzed is "backtracked" by moving it backward. When a backward moving token hits an exclusive diverging gateway exit or a converging exclusive gateway exit, it just passes through the gateway. When a token hits a converging inclusive gateway exit, all entries to the gateway will be filled with tokens that propagate further backward. When a token hits an inclusive diverging gateway exit, it passes through but increases by +1 a counter on the other exits to the gateway. If now a token arrives to an exit with a non-zero counter, the token will be "swallowed" by the gateway (it does not pass through), and the counter is decreased again by 1. If the counter arrives at zero again, arrival of a token will lead to increasing the counters of the other exits.

This procedure is chosen such that only the minimum possible number of tokens that must have existed before the inclusive diverging gateway is created. It effectively assumes that the inclusive diverging gateway, when a token passes through it in the forward direction, will emit a token at each exit. Ignoring time ordering issues and the conditions attached to the gateway exits means that backward propagation will create the minimum possible number of tokens that must have entered the inclusive diverging gateway in the forward direction, to be compatible with the observed token position.

The procedure continues until there are no more tokens that can be moved backwards. Two situations can arise:
1) A single token is present at the Start element of the workflow. Then, the initial token configuration is deemed acceptable.
2) More than one token is present at the Start element of the workflow. This is impossible, since it would correspond to starting more than one instance of the workflow. The system displays a warning saying "excessive number of tokens".

The simplest example is that of a linear workflow execution graph without any gateways. In this case, it is obvious that there should not be more than one token, and the backward propagation mechanism shows this immediately as well. Another example is that of a linear graph splitting into two through an exclusive diverging gateway. Both branches lead directly to an End element. It is then clear that there cannot ever be more than one token in the workflow. The backward propagation method again shows this correctly.

A third group of checks performed by the algorithm is the check on a missing input. This check is not about inconsistent token configurations or interactions between tokens, but is intended to cover the problem that displacing or creating tokens may lead to situations where the tasks to be executed next have undefined input variables. This is because these input variables would have been set by the output of previous tasks in the case of automatic workflow execution without manual interference, but manual intervention may have been such that these tasks were "jumped over" so that the necessary settings of input variables did not, or only partially, occur.

In order to realize this check, the system will look up, for each task in front of which a token is placed, the input variables and their connections to output variables of preceding tasks as specified in the BPMN workflow graph. The system also keeps track of all write operations to input variables. If it finds a task with input variables that should have been set but were not, a warning is displayed indicating task and input variable. The user can then enter a value manually.

## Claims

1. A method for automatic consistency checking after manual intervention in BPMN based workflow execution in a production environment, comprising the steps of:
a) providing a BPMN based workflow for the production environment in terms of a BPMN based workflow graph (2) of tasks (t); said production environment comprising a plurality of production resources;
b) operating the plurality of production resources according to the tasks (t) defined in the BPMN based workflow graph (2) ;
c) displaying the status of the BPMN based workflow execution on a graphical user interface by tokens (12, 16 to 20) which represent at their respective current location in a BPMN based workflow graph (2) the status of the BPMN based workflow execution;
d) providing a touch sensitive screen within the graphical user interface for manual intervention in the BPMN based workflow execution;
e) changing the status of the BPMN based workflow execution by manual intervention in terms of:
e1) moving an existing token (12) to a new position within the BPMN based workflow graph; and/or
e2) removing an existing token from the BPMN based workflow; and/or
e3) creating a new token (16, 18) and inserting the new token at a distinct position in the BPMN based workflow graph (2);
f) applying an algorithm for checking whether the manual intervention has properly observed certain logical criteria taking into account a topology of the workflow graph (2), wherein the algorithm is enabled to analyze a token configuration after manual intervention for the following logical criteria:
f1) potentially unwanted interactions between tasks (t); and/or
f2) excessive number of new tokens (16, 18) created being incompatible with any possible workflow during resumed automatic BPMN based workflow execution; and/or
f3) missing values for required input variables of tasks (t);
g) indicating by warning messages whether the algorithm has identified a violation of the logical criteria.
